# EUROPEAN PATENT SPECIFICATION

(11) **EP 4 088 963 B1**
(45) Date of publication and mention of the grant of the patent: **25.10.2023**
(21) Application number: 20927377.0
(22) Date of filing: 30.09.2020
(51) Int. Cl.: B60L 50/64

(54) **TRACTOR POWER SUPPLY SYSTEM**
STROMVERSORGUNGSSYSTEM FÜR EINEN TRAKTOR
SYSTÈME D'ALIMENTATION ÉLECTRIQUE DE TRACTEUR

(30) Priority: 24.03.2020 CN 202020390600 U
(43) Date of publication of application: 16.11.2022
(73) Proprietor: HOI TUNG INNOTEK (SHENZHEN) CO., LTD., Shenzhen, Guangdong 518067 (CN)
(72) Inventor: AN, Tonghui, Shenzhen, Guangdong 518067 (CN); SUN, Xiaoliang, Shenzhen, Guangdong 518067 (CN); LIN, Bingcheng, Shenzhen, Guangdong 518067 (CN); ZHAN, Weibiao, Shenzhen, Guangdong 518067 (CN); FENG, Weiyan, Shenzhen, Guangdong 518067 (CN)
(74) Representative: Chung, Hoi Kan
(86) International application number: PCT/CN2020/119555
(87) International publication number: WO 2021/189805

(56) References cited:
- CN-A- 107 769 333
- CN-A- 108 544 977
- CN-A- 110 562 051
- CN-A- 110 562 051
- CN-U- 207 106 210
- US-A1- 2011 114 398
- US-B2- 10 150 358

## Description

### TECHNICAL FIELD

The utility model relates to the field of power supply systems, and in particular to a power supply system of an electric tractor.

### BACKGROUND

An electric tractor is driven by a motor and used for short-distance horizontal transport of goods in regional yards such as ports, materials are often stored in a trailer, and the tractor is needed to solve the efficient transport of materials in different sections. At present, when enterprises use the electric tractors powered by electric energy, the tractors are required to work continuously because of the demand of working conditions in wharf operation, frequently start with no load and heavy load, accelerate, suddenly stop and wait for a long time, and have various and complicated working conditions. The traditional electric tractor has insufficient battery installation space, limited battery configuration capacity, and limited working endurance mileage and working time, which cannot meet the requirements of long-term operation of the electric tractor, and affects working efficiency.

### SUMMARY

The purpose of the utility model is to provide a tractor power supply system in the process of supplying power to a power system of a tractor, so as to solve the technical problem that the traditional power supply system cannot meet the requirements for endurance mileage and working time due to low battery capacity.

To achieve the above purpose, the technical means adopted by the utility model is as follows:
The tractor power supply system is used for supplying power to the power system of the tractor, and the tractor power supply system is provided above or below a transport trailer connected to the tractor.

The embodiment of the utility model has the following beneficial effects:

The tractor power supply system is provided above or below a transport trailer connected to the tractor, and the tractor power supply system can be configured with battery modules of different capacities according to use conditions of the tractor by utilizing the characteristic of a large installation space of the transport trailer, so that the endurance mileage and the working time of the tractor are ensured.

### BRIEF DESCRIPTION OF DRAWINGS

In order to describe the technical solutions in the embodiments of the utility model or the prior art more clearly, drawings required to be used in the description of the embodiments or the prior art will be briefly introduced below. It is apparent that the drawings described below are only some embodiments of the utility model. Those of ordinary skill in the art may further obtain other drawings according to these drawings without creative work.

In the drawings,
FIG. 1 is a structure connection block diagram of a tractor power supply system in an embodiment.
FIG. 2 is a structural schematic diagram of a tractor.
FIG. 3 is a schematic diagram of an installation position of the tractor power supply system on a transport trailer in one embodiment.
FIG. 4 is a structural schematic diagram of the tractor power supply system.
FIG. 5 is a schematic diagram of a bracket in the tractor power supply system shown in FIG. 1.
FIG. 6 is a schematic diagram of a first case in the tractor power supply system shown in FIG. 1.
FIG. 7 is a schematic diagram of a second case/a third case in the tractor power supply system shown in FIG. 1.
FIG. 8 is a schematic diagram of a protective fence in the tractor power supply system shown in FIG. 1.

### DETAILED DESCRIPTION OF THE EMBODIMENTS

The technical solutions in the embodiments of the utility model will be clearly and completely described below with reference to the drawings in the embodiments of the utility model. It is apparent that the described embodiments are only a part of the embodiments of the utility model, rather than all of the embodiments. All other embodiments obtained by a person of ordinary skill in the art based on the embodiments of the utility model without creative efforts shall fall within the protection scope of the utility model.

A tractor power supply system 10 provided by the embodiment of the utility model is used for supplying power to the power system 21 of the tractor 20. Of course, in other embodiments of the present invention, the tractor power supply system 10 can also be used for supplying power to other power systems, which is not limited here.

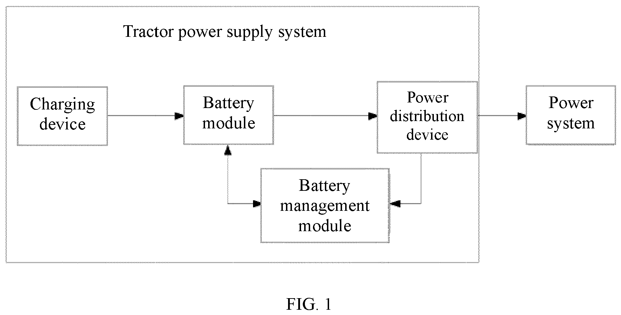

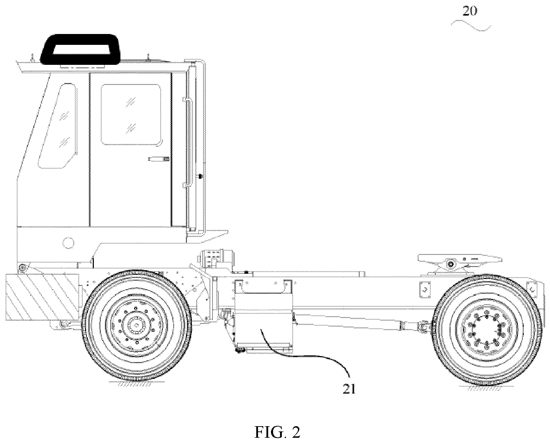

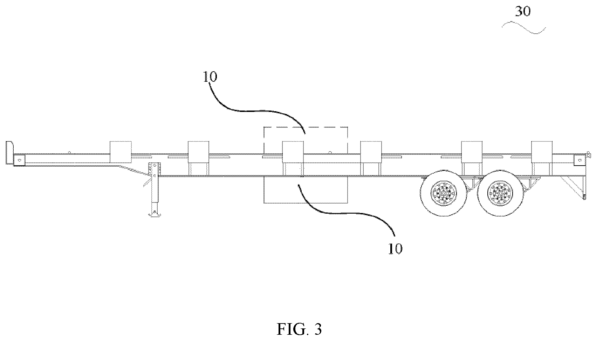

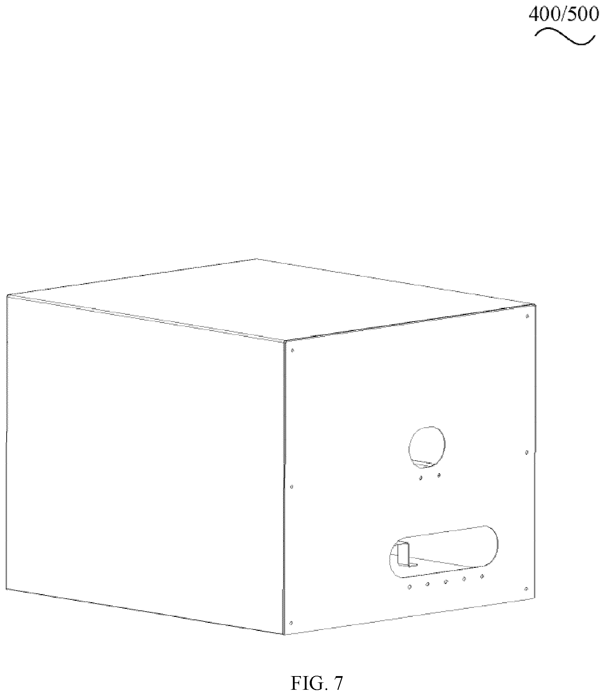

Referring to FIG. 1 to FIG. 8 together, the tractor power supply system 10 provided by the utility model is described now. The tractor power supply system 10 is provided above or below a transport trailer 30 connected to a tractor 20. The transport trailer 30 has large available installation space. When the tractor power supply system 10 is installed above or below the transport trailer 30, the the tractor power supply system 10 can be configured with battery modules of different capacities according to the working conditions of the tractor 20, so that the endurance mileage and working time of the tractor 20 are ensured.

Further, the tractor power supply system 10 comprises battery modules, a battery management module and a power distribution device. The battery management module is used for data acquisition and logic control of the voltages, electric charge quantity and temperatures of the battery modules. The battery modules are electrically connected to the power system 21 through the power distribution device, and are used for supplying DC (direct-current) power to the power system 21. Specifically, the tractor 20 is also provided with a full-vehicle control module. The full-vehicle control module is respectively in communication connection with the battery management module, a motor control module, a power source conversion module and an electrical accessory control module through a CAN bus. When the tractor 20 and the transport trailer 30 are connected, the power distribution device electrically connects the battery modules to the power system 21 through high-voltage wiring harnesses for supplying power to the power system 21. Meanwhile, the power distribution device is connected to the full-vehicle control module through low-voltage controller wiring harnesses. The battery modules are controlled by the full-vehicle control module to supply power to the power system 21. The low-voltage controller wiring harnesses are connected to the full-vehicle control module through connectors. The battery management module is used for data acquisition and logic control of the voltages, electric charge quantity and temperatures of the battery modules in a CAN communication manner. The motor control module is connected to a main drive motor in the power system 21, collects the data of running power, voltages, electric currents and temperatures, and uploads the data to the full-vehicle control module for data processing and comparison, and the full-vehicle control module sends the logic information of the control data to the motor control module, which directly controls the running state of the main drive motor. The power source conversion module provides required source power, voltages and electric currents for the connection of electric equipment of a full vehicle, is connected to the full-vehicle control module through a CAN network, and processes and logically controls data such as source power, voltages and electric currents. The electric accessory control module is connected to the electric accessory device of the full vehicle, is connected to the full-vehicle control module through the CAN network, and transmits its related control data information to the full-vehicle control module for data processing and logic control. The full-vehicle control module can be HCU(Hybrid Control Unit), the power source conversion module is a DC/DC (direct current/direct current) power source conversion module, and the electrical accessory control module is a three-in-one electrical accessory control module.

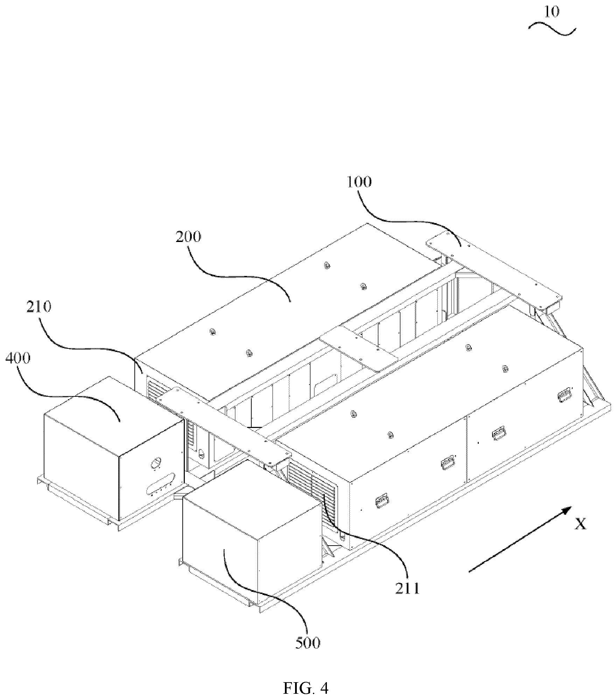

Referring to FIG. 4 to FIG. 8 together, the tractor power supply system 10 is arranged above or below the transport trailer 30 through a bracket 100, so that the tractor power supply system 10 has large external space, which is conductive to heat dissipation. First cases 200 are arranged on the bracket 100, and the battery modules are suspended in the first cases 200. The battery modules are used for supplying power to the power system 21. That is, when the tractor 20 and the transport trailer 30 are connected, the power system 21 is powered by the battery modules for the operation of the tractor 20. When the electric charge quantity of the battery modules is too low, the transport trailer 30 can be replaced, the battery modules on the replaced transport trailer 30 can be charged, and the tractor 20 can be connected to another transport trailer 30 for continuous operation, thereby ensuring that the full vehicle can work 24 hours a day. The first cases 200 are connected to the transport trailer 30 through the bracket 100, and the first cases 200 are prevented from being directly connected to the transport trailer 30, such that a gap is present between the transport trailer 30 and each of the first cases 200 so as to facilitate air flow for heat dissipation of the first cases 200. In the present embodiment, the number of the first cases is two. The two first cases 200 are respectively located on the two sides of the axis of the transport trailer 30. The battery modules of the same capacity and weight are respectively suspended in the two first cases 200.

As the transport trailer 30 has sufficient space for loading the battery modules, the transport trailer 30 can be configured with large-capacity battery modules, so that the battery capacity of the power system 21 is improved. Further, the endurance mileage and working time of the tractor 20 are prolonged. The working efficiency of the tractor 20 is improved. At the same time, as the transport trailer 30 has relatively large space, the maintenance difficulty and the maintenance cost can be reduced, the maintenance efficiency is improved, and the overall working efficiency of the tractor 20 is improved.

In the present embodiment, compared with a technical scheme of placing the tractor power supply system 10 on the sides and rear of a cab of the tractor 20 and on both sides of a vehicle body, the technical scheme of assembling the tractor power supply system 10 on the transport trailer 30 has the beneficial effects that the tractor power supply system 10 can be effectively protected and is prevented from being impacted and crushed by the outside, and the safety performance of the tractor power supply system 10 is improved.

The first cases 200 play a role in wrapping the battery modules, and improve the waterproof and dustproof capabilities of the battery modules. The battery modules are suspended in the first cases 200. A certain gap is provided between each of the battery modules and each of the first cases 200, so that the battery modules can be protected when an external object collides with the first cases 200. At the same time, when the full vehicle works, the hidden danger that the battery modules collide with the first cases 200 and the transport trailer 30 due to the vibration of the transport trailer 30 can be avoided.

Further, each of the first cases 200 has a first side wall (not shown) and a second side wall 210 which are oppositely arranged. The first side wall is provided with a first ventilation structure (not shown). The second side wall 210 is provided with a second ventilation structure 211. The first side wall and the second side wall 210 are arranged in a direction parallel to the axis of the transport trailer 30, so that while the transport trailer 30 is moving, wind can enter the first case 200 from the first ventilation structure and be discharged from the second ventilation structure 211, thus achieving cooling and heat dissipation for the battery modules. The axis direction of the transport trailer 30 is parallel to the direction indicated by an arrow x in FIG. 4.

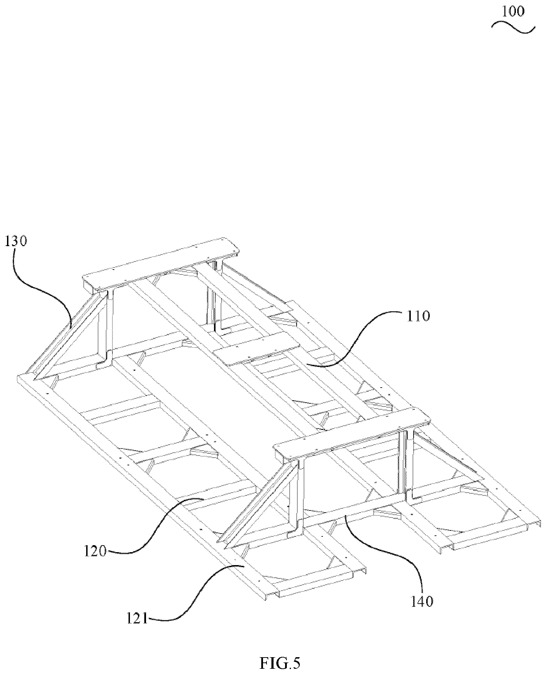

As shown in FIG. 5, in the present embodiment, the bracket 100 comprises an upper bracket body 110 and two lower bracket bodies 120. Each of the lower bracket bodies 120 is connected to the lower end of each of the first cases 200 in one-to-one correspondence. The upper bracket body 110 and the lower bracket bodies 120 are parallel to each other and connected by tripods 130. The lower bracket bodies 120 are connected by horizontal frames 140. The bracket 100 is connected to the transport trailer 30 through bolts.

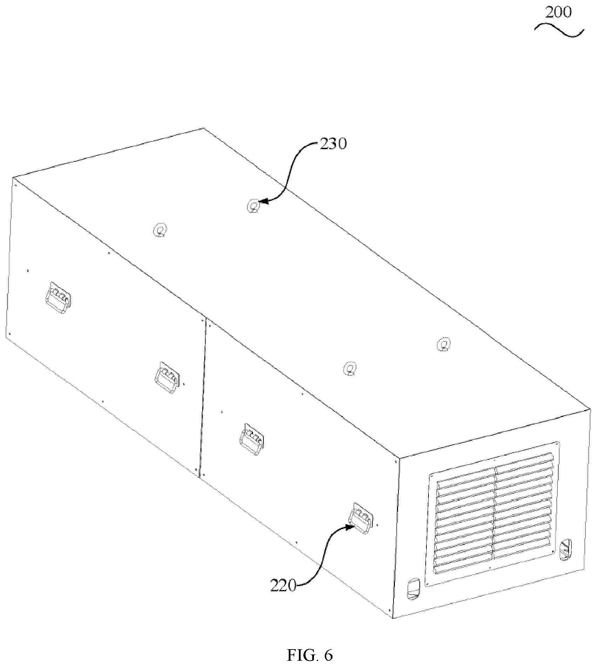

The installation space in each of the first cases 200 is sufficient, and each of the battery modules itself can form a good heat dissipation air duct, which ensures that the temperature of each of the battery modules is controlled in the optimal working range when the tractor power supply system 10 is working. The service life of the tractor power supply system 10 is prolonged. Further, the first ventilation structure and the second ventilation structure 211 are fence holes or louver holes 211. As shown in FIG. 6, in the present embodiment, the first ventilation structure and the second ventilation structure 211 are the louver holes 211. The louver holes 211 are used to prevent relatively large sundries from entering the first cases 200 to damage the battery modules under the premise of satisfying ventilation. Each of the first cases 200 is further provided with handles 220 and lifting lugs 230 for moving the first case 200.

Referring to FIG. 4 to FIG. 7 together, the tractor power supply system 10 further comprises a second case 400 and a third case 500 which are arranged on the bracket 100. The power distribution device is contained in the second case 400. The charging device for charging the battery modules is contained in the third case 500. The second case 400 and the third case 500 are arranged, so that the power distribution device and the charging device are independent. The stress of the entire tractor power supply system 10 is avoided from being too concentrated, at the same time, the arrangement of the wiring harnesses is facilitated, and the maintenance convenience is improved when the tractor power supply system 10 fails. In the present embodiment, the second case 400 and the third case 500 are arranged in one-to-one correspondence with the first cases 200 in an axial direction parallel to the transport trailer 30. Specifically, the second case 400 and the third case 500 are connected to the extension portions 121 of the lower bracket bodies 120 in one-to-one correspondence. Both the second case 400 and the third case 500 are opposite to the corresponding second side walls 210 at intervals so as to facilitate air flow for heat dissipation. Further, a shock absorbing device is arranged between the tractor power supply system 10 and the transport trailer 30. Specifically, shock-absorbing pads are arranged between the first cases 200 and the bracket 100, between the second case 400 and the extension portion 121 and between the third case 500 and the extension portion 121. Due to the flexible physical connection, when the full vehicle is working, the anti-vibration capabilities of the first cases 200, the battery modules, the second case 400, the power distribution device, the third case 500 and the charging device are improved, and the service life of the entire tractor power supply system 10 is prolonged.

Further, the tractor power supply system 10 further comprises an energy recovery device. The energy recovery device is used for converting energy generated when the tractor 20 brakes into electric energy and for recovering the electric energy to the battery modules through the power distribution device. The tractor power supply system 10 supplies power to the power system 21 according to the set control strategy. Therefore, the endurance mileage of the tractor 20 can be prolonged, the performance and safety of the tractor 20 are not affected, and meanwhile, the overall working efficiency of the tractor 20 can be improved.

Further, the charging device is provided with dual-gun charging sockets. The dual-gun charging sockets are used for connection with charging pile plugs to charge the battery modules. In the present embodiment, the dual-gun charging sockets face the outside of the transport trailer 30, which is convenient for external charging piles to charge the battery modules. The charging device transfers electric energy externally input to the battery modules for storage. The dual-gun charging sockets can satisfy the requirement that two charging piles charge the battery modules at the same time, and thus, the purpose of fast charging is achieved. Any one of the dual-gun charging sockets can also be selected for connection according to requirements for charging.

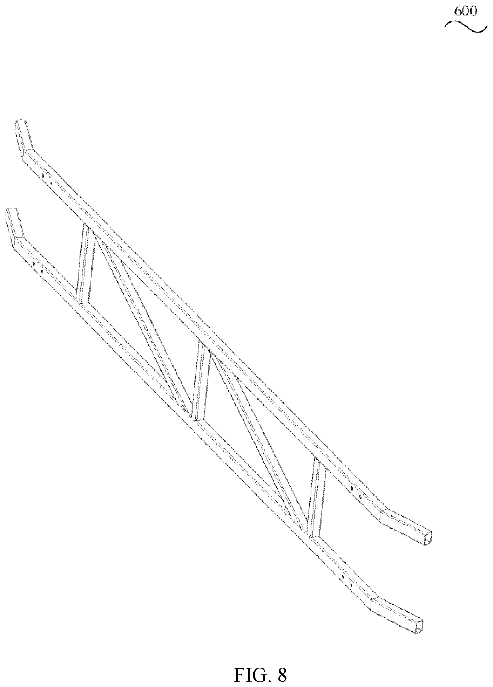

As shown in FIG. 8, further, the transport trailer 30 is provided with protective fences 600 used for protecting the tractor power supply system 10. The protective fences 600 are arranged on both sides of the bracket 100 to form external protection for the entire tractor power supply system 10. The entire protective fences 600 form a wrapping state for the first cases 200, the second case 400 and the third case 500. The protective fences 600 are connected to the transport trailer 30 without increasing the load bearing of the bracket 100. At the same time, a certain gap is provided respectively between the protective fences 600 and the first cases 200, between the protective fence and the second case 400 and between the protective fence and the third case 500 to protect the entire tractor power supply system 10.

In one specific embodiment, the tractor power supply system 10 comprises the following working state:
1. quick start: the tractor power supply system comprises the power distribution device, the full-vehicle control module, the battery management module, the motor control module, the DC/DC (direct current/direct current) power conversion module, and the three-in-one electrical accessory control module. The full-vehicle control module is a main data processing and logic control core component, is in communication connection with components of the battery management module, the motor control module, the DC/DC power conversion module, and the three-in-one electrical accessory control module through vehicle-mounted CAN communication, and acquire relevant data information for processing and control interaction. The battery management module performs data acquisition and logic control on the voltages, electric charge quantity and temperatures of the battery modules through CAN communication. The tractor 20 controls the power supply of the full vehicle through the full-vehicle control module, so that the vehicle can quickly enter the working mode.
2. smooth start: after the tractor 20 is connected to the transport trailer 30, the battery modules supply power. The power system 21 drives the tractor 20 to travel, and the tractor 20 starts smoothly and powerfully. There are no gear cases, no shifting process, and no power interruption, the tractor 20 has continuous power, is easy to drive and is comfortable to ride.
3. energy feedback: when a driver releases an accelerator or depresses a brake pedal, or performs other braking actions, the power system 21 generates braking resistance, and the generated energy is converted into electric energy to charge the battery modules. The energy recovered from the braking feedback can be used as power for assisting the power system 21 and as power in a pure electric mode.
4. external fast charging function: the tractor power source 20 comprises the battery modules. The battery modules are charged by the charging device. The charging device is provided with the dual-gun charging sockets which area used for being connected to the charging pile plugs to charge the battery modules.

In conclusion, compared with the conventional tractor 20 with a large number of battery modules piled up on the sides and rear of the cab of the tractor 20 and on both sides of the vehicle body, the tractor power supply system 10 provided in the embodiment of the present application has the advantages that the protection for the battery modules is improved, and the safety of the battery modules is greatly improved. At the same time, the space is relatively large, more power is supplied, and the endurance mileage and working time are prolonged. The inspection and maintenance of the batteries are also more convenient while the space is enlarged.

Moreover, due to the change of the battery arrangement mode, the battery modules have sufficient space for arrangement of the air ducts, so that the temperature rise of the battery modules is relatively slow, the maximum temperature and average temperature during operation are reduced, and the failure rate is reduced. At the same time, the capacity fading of the battery modules becomes slow, which improves the service life of the battery modules. Further, the arrangement space of the high-voltage wiring harnesses is enlarged, the high-voltage wiring harnesses can be separated from the low-voltage control wiring harnesses by a sufficient distance so as to prevent the tractor 20 from being incapable of working normally due to the interference caused by communication, and the stability of the tractor 20 is improved.

Aiming at the characteristics that the wharf tractor 20 frequently starts with no load and heavy load, climbs, accelerates, stops suddenly, waits for a long time, works 24 hours a day, and has various and complicated working states, the tractor power supply system 10 adopts lithium battery packs as the battery modules for power supply, the electric driving mode and braking energy recovery mode of the wharf tractor 20 with pure lithium battery output are realized, the energy loss is reduced, and zero oil consumption and pollution emission of the tractor 20 are completely realized.

What is mentioned above is only preferred embodiments of the utility model, cannot limit the implementation scope of the utility model for this reason, that is, all the equivalent changes made according to the claims of the utility model still belongs to the scope contained in the utility model.

## Claims

1. A tractor power supply system (10) for supplying power to a power system (21) of a tractor (20), wherein the tractor power supply system (10) is provided above or below a transport trailer (30) connected to the tractor (20);
the tractor power supply system (10) comprises battery modules, a battery management module and a power distribution device;
the tractor power supply system (10) further comprises an energy recovery device used for converting energy generated when the tractor (20) brakes into electric energy and for recovering the electric energy to the battery modules through the power distribution device;
**characterised in that** the
transport trailer (30) is provided with protective fences (600) used for protecting the tractor power supply system (10); and
wherein a shock absorbing device is arranged between the tractor power supply system (10) and the transport trailer (30).

2. The tractor power supply system (10) of claim 1, wherein the tractor power supply system (10) comprises battery modules, a battery management module and a power distribution device,
the battery management module is used for data acquisition and logic control of the voltages, electric charge quantity and temperatures of the battery modules; and
the battery modules are electrically connected to the power system through the power distribution device, and are used for providing DC (direct current) power to the power system.

3. The tractor power supply system (10) of claim 2, wherein the tractor power supply system (10) is provided above or below the transport trailer (30) through a bracket (100).

4. The tractor power supply system (10) of claim 3, wherein first cases (200) are arranged on the bracket (100), and the battery modules are suspended in the first cases (200),
a gap is provided between each of the first cases (200) and the transport trailer (30), each of the first cases (200) has a first side wall and a second side wall (210) oppositely arranged, a first ventilation structure is arranged on the first side wall, a second ventilation structure (211) is arranged on the second side wall (210), and the first side wall and the second side wall (210) are arranged in a direction parallel to the axis of the transport trailer (30), so that while the transport trailer (30) is moving, wind can enter the first cases (200) from the first ventilation structures and discharged from the second ventilation structures (211).

5. The tractor power supply system (10) of claim 4, wherein the first ventilation structure and the second ventilation structure (211) are fence holes or louver holes.

6. The tractor power supply system (10) of claim 5, wherein a second case (400) and a third case (500) are arranged on the bracket (30), the power distribution device is accommodated in the second case (400), and the charging device for charging the battery modules are accommodated in the third case (500).

7. The tractor power supply system (10) of claim 6, wherein the charging device is provided with the dual-gun charging sockets which are used for connection with charging pile plugs to charge the battery modules.

## Patentansprüche

1. Traktor-Stromversorgungssystem (10) zur Stromversorgung eines Stromsystems (21) eines Traktors (20), wobei das Traktor-Stromversorgungssystem (10) oberhalb oder unterhalb eines mit dem Traktor verbundenen Transportanhängers (30) vorgesehen ist (20);
wobei das Traktor-Stromversorgungssystem (10) Batteriemodule, ein Batteriemanagementmodul und eine Stromverteilungseinrichtung umfasst;
wobei das Traktor-Stromversorgungssystem (10) außerdem eine Energierückgewinnungsvorrichtung umfasst, die dazu dient, die beim Bremsen des Traktors (20) erzeugte Energie in elektrische Energie umzuwandeln und die elektrische Energie über die Stromverteilungsvorrichtung an die Batteriemodule zurückzugeben;
**dadurch gekennzeichnet, dass** der Transportanhänger (30) mit Schutzzäunen (600) versehen ist, die zum Schutz des Traktor-Stromversorgungssystems (10) dienen; und wobei eine stoßdämpfende Vorrichtung zwischen dem Traktor-Stromversorgungssystem (10) und dem Transportanhänger (30) angeordnet ist.

2. Traktor-Stromversorgungssystem (10) nach Anspruch 1, wobei das Traktor-Stromversorgungssystem (10) Batteriemodule, ein Batteriemanagementmodul und eine Stromverteilungsvorrichtung umfasst,
wobei das Batteriemanagementmodul zur Datenerfassung und logischen Steuerung der Spannungen, elektrischen Ladungsmenge und Temperaturen der Batteriemodule dient; und
wobei die Batteriemodule über die Stromverteilungsvorrichtung elektrisch mit dem Stromsystem verbunden sind und zur Versorgung des Stromsystems mit Gleichstrom (DC) dienen.

3. Traktor-Stromversorgungssystem (10) nach Anspruch 2, wobei das Traktor-Stromversorgungssystem (10) über oder unter dem Transportanhänger (30) durch eine Konsole (100) bereitgestellt wird.

4. Traktor-Stromversorgungssystem (10) nach Anspruch 3, wobei erste Gehäuse (200) an der Konsole (100) angeordnet sind und die Batteriemodule in den ersten Gehäusen (200) aufgehängt sind, wobei ein Spalt zwischen jedem der ersten Gehäuse (200) und dem Transportanhänger (30) vorgesehen ist, wobei jedes der ersten Gehäuse (200) eine erste Seitenwand und eine zweite Seitenwand (210) aufweist, die gegenüberliegend angeordnet sind, wobei eine erste Belüftungsstruktur an der ersten Seitenwand angeordnet ist und eine zweite Belüftungsstruktur (211) an der zweiten Seitenwand (210) angeordnet ist, wobei die erste Seitenwand und die zweite Seitenwand (210) in einer Richtung parallel zur Achse des Transportanhängers (30) angeordnet sind, so dass während der Bewegung des Transportanhängers (30) Wind von den ersten Belüftungsstrukturen in die ersten Gehäuse (200) eintreten und von den zweiten Belüftungsstrukturen (211) austreten kann.

5. Traktor-Stromversorgungssystem (10) nach Anspruch 4, wobei die erste Belüftungsstruktur und die zweite Belüftungsstruktur (211) Zaunlöcher oder Luftschlitzlöcher sind.

6. Traktor-Stromversorgungssystem (10) nach Anspruch 5, wobei ein zweites Gehäuse (400) und ein drittes Gehäuse (500) an der Konsole (30) angeordnet sind, wobei die Stromverteilungseinrichtung in dem zweiten Gehäuse (400) untergebracht ist und die Ladeeinrichtung zum Laden der Batteriemodule in dem dritten Gehäuse (500) untergebracht ist.

7. Traktor-Stromversorgungssystem (10) nach Anspruch 6, wobei die Ladeeinrichtung mit den Doppelpistolen-Ladesteckdosen ausgestattet ist, die zum Anschluss an Ladesäulensteckern zum Aufladen der Batteriemodule dienen.

## Revendications

1. Système d'alimentation électrique de tracteur (10) pour alimenter l'électricité à un système électrique (21) d'un tracteur (20), dans lequel le système d'alimentation électrique de tracteur (10) est fourni au-dessus ou au-dessous d'une remorque à transport (30) relié au tracteur (20) ; le système d'alimentation électrique de tracteur (10) comprend des modules de batterie, un module à gérer une batterie et un dispositif à distribuer l'électricité ; le système d'alimentation électrique de tracteur (10) comprend en outre un dispositif à récupérer l'énergie utilisée pour convertir l'énergie amenée au moment du freinage du tracteur (20) en énergie électrique et pour récupérer l'énergie électrique dans lesdits modules de batterie par ledit dispositif à distribuer l'électricité; **caractérisé en ce que** ladite remorque à transport (30) est munie d'une clôture de protection (600) utilisée pour protéger le système d'alimentation électrique de tracteur (10) ; et dans lequel un dispositif à absorber des chocs est disposé entre le système d'alimentation électrique de tracteur (10) et ladite remorque à transport (30).

2. Système d'alimentation électrique de tracteur (10) selon la revendication 1, dans lequel le système d'alimentation électrique de tracteur (10) comprend des modules de batterie, un module à gérer une batterie et un dispositif à distribuer l'électricité, ledit module à gérer une batterie est utilisé pour l'acquisition de données et le contrôle logique des voltage, la quantité à charger et les températures des modules de batterie, et lesdits modules de batterie sont connectés électriquement au système électrique via ledit dispositif à distribuer l'électricité, et utilisés pour fournir une DC électricité(courant continu) au système électrique.

3. Système d'alimentation électrique de tracteur (10) selon la revendication 2, dans lequel le système d'alimentation électrique de tracteur (10) est fourni au-dessus ou au-dessous de ladite remorque à transport (30) par un support (100).

4. Système d'alimentation électrique de tracteur (10) selon la revendication 3, dans lequel des premiers boîtiers (200) sont disposés sur ledit support (100) et lesdits modules de batterie sont suspendus dans lesdits premiers boîtiers (200), un écart est prévu entre chacun desdits premiers boîtiers (200) et ladite remorque à transport (30), chacun desdits premiers boîtiers (200) a une première paroi latérale et une deuxième paroi latérale (210) disposées contrairement, une première structure de ventilation est disposée sur ladite première paroi latérale, une deuxième structure de ventilation (211) est disposée sur ladite deuxième paroi latérale (210), ladite première paroi latérale et ladite deuxième paroi latérale (210) sont disposées dans une direction parallèle à l'axe de ladite remorque à transport (30), pour que le vent peut pénétrer dans desdits premiers boîtiers (200) depuis ladite première structure de ventilation et se décharger de ladite deuxième structure de ventilation (211) pendant que ladite remorque à transport (30) est en mouvement.

5. Système d'alimentation électrique de tracteur (10) selon la revendication 4, dans lequel ladite première structure de ventilation et ladite deuxième structure de ventilation (211) sont des trous de clôture ou des trous de persienne.

6. Système d'alimentation électrique de tracteur (10) selon la revendication 5, dans lequel un deuxième boîtier (400) et un troisième boîtier (500) sont disposés sur ledit support (30), ledit dispositif à distribuer l'électricité est logé dans ledit deuxième boîtier (400), et un dispositif de charge à charger lesdits modules de batterie est logé dans ledit troisième boîtier (500) .

7. Système d'alimentation électrique de tracteur (10) selon la revendication 6, dans lequel ledit dispositif de charge est fourni avec les prises femelle de charge à pistolet double qui sont utilisées pour la connexion avec les prise mâle de pieu de charge pour charger lesdits modules de batterie.
